# EUROPEAN PATENT SPECIFICATION

(11) **EP 2 002 234 B1**
(45) Date of publication and mention of the grant of the patent: **30.10.2019**
(21) Application number: 07772812.9
(22) Date of filing: 13.03.2007
(51) Int. Cl.: G07C 5/08, G01M 17/00, G06F 7/00

(54) **VEHICLE EVENT RECORDERS WITH INTEGRATED WEB SERVER**
FAHRZEUG-EREIGNISAUFZEICHNUNGSVORRICHTUNG MIT INTEGRIERTEM INTERNETSERVER
ENREGISTREURS D'ÉVÉNEMENTS DE VÉHICULE À SERVEUR WEB INTÉGRÉ

(30) Priority: 16.03.2006 US 377164
(43) Date of publication of application: 17.12.2008
(73) Proprietor: Smartdrive Systems, Inc., San Diego, CA 92121 (US)
(72) Inventor: PLANTE, James, San Diego, CA 92121 (US)
(74) Representative: Cabinet Beau de Loménie
(86) International application number: PCT/US2007/006404
(87) International publication number: WO 2007/117378

(56) References cited:
- EP-A2- 1 427 165
- WO-A1-97/26750
- WO-A2-2004/066275
- US-A- 5 815 093
- US-A1- 2005 131 595
- US-A1- 2005 182 824
- US-A1- 2005 216 144
- US-B1- 6 389 339
- US-B1- 6 421 080

## Description

### TECHNICAL FIELD

The present invention relates to vehicle event recorders. More specifically, the present invention relates to vehicle event recorder systems having integrated web server modules.

### BACKGROUND ART

Video surveillance systems are used to provide video records of events, incidents, and of other situation in locations of special interest. For example, retail banking offices are generally protected with video surveillance systems that provide video evidence in the event of robbery. While such video surveillance systems are typically used in fixed locations, mobile video surveillance systems are also commonly used today.

Certain video systems have been configured for use with automobiles, for example, with police cruisers. Because a police cruiser is frequently situated near the scene of an active crime, important imagery may be captured by video cameras installed on the police cruiser.

Activity of interest occurring near an automobile is not always associated with crime and criminals. Events to be recorded may occur in the proximity of an automobile, which are of interest for reasons unrelated to crime. For example, a traffic accident in which two cars collide may be valuable video evidence. Events and circumstances leading to the collision may be preserved to provide an accurate reconstruction of the accident and may be useful in determining cause, fault and liability. Therefore, the use of video systems related to automobiles is rapidly becoming a tool useful not only for fighting crimes, but also for the general protection of the public.

U.S. Patent No. 5,570,127 to Schmidt discloses a video recording system for a passenger vehicle, such as a school bus, having two video cameras, one providing an inside view of the bus and the other one providing a view of the traffic, a single recorder, and a system multiplexing the two cameras to the recording device at appropriate times. A switching signal determines which of the two video cameras communicates with the video recorder, so as to view passengers at certain times and traffic at other times.

U.S. Patent No. 5,586,130 to Doyle discloses a method and apparatus for detecting fault conditions in a vehicle data-recording device, in order to detect tampering or unauthorized access. The system includes vehicle sensors for monitoring one or more operational parameters of the vehicle. The fault detection technique contemplates storing a current time value at regular intervals during periods, in which the recording device is provided with a source of main power. US Patent No. 5,815,071 to Doyle discloses instead a method and apparatus for monitoring parameters of vehicle electronic control units.

U.S. Patent No. 5,815,093 to Kikinis discloses a computerized vehicle log, a vehicle accident recording system that employs a digital camera connected to a controller in nonvolatile memory, and an accident sensing interrupter. The oldest recorded images are overwritten by the newest images, until an accident is detected, at which time the memory is blocked from further overwrites to protect the more vital images that may include important information about the accident. In preferred embodiments, the system of the '093 patent includes a communication port for downloading stored images, after an accident, to a digital device capable of displaying the images. In particular, the '093 patent describes a wired download to a server having specialized image handling and processing software thereon.

U.S. Patent No. 6,002,326 to Turner discloses an antitheft device for an automotive vehicle having both an audible alarm and visual monitor system. Video monitor operators are responsible for monitoring and handling an emergency situation and informing an emergency station.

U.S. Patent No. 6,088,635 to Coz et al. discloses a vehicle accident video recorder, in particular, a railroad vehicle accident video recorder. In particular, the '635 patent teaches a method and a monitoring unit for recording the status of the railroad vehicle prior to a potential accident is presented. The monitoring unit continuously monitors the status of an emergency brake of the railroad vehicle and the status of a horn of the railroad vehicle. Video images are recorded and captured for a predetermined period of time after detecting that the emergency brake or horn blast has been applied as an event trigger.

U.S. Patent No. 6,185,490 to Ferguson discloses a video crash data recorder having a three-stage memory for recording and retaining information. This recorder is further equipped with serial and parallel connectors to provide instant on-scene access to accident data. The '490 patent also teaches on-site access to the data, and a wired connection in the form of a serial or parallel hardwire connectors. Other known vehicle event recorders provide for serial and parallel hardwire connections.

U.S. Patent No. 6,246,933 to Bague teaches a traffic accident data recorder and traffic accident reproduction system and method. Sensors for registering parameters related to vehicle operation include at least a vehicle mounted digital video camera and an audio recorder. A rewritable, nonvolatile memory stores processed operational parameters and video images and audio signals, which are provided by a microprocessor controller. Data is converted to a computer readable form and read by a computer, so that an accident can be reconstructed via the collected data.

U.S. Patent No. 6, 298, 290 to Abe et al. teaches a memory apparatus for vehicle information data. A plurality of sensors including a CCD camera, a speed sensor, a steering angle sensor, a brake pressure sensor, and an acceleration sensor are coupled to a control unit that passes information to a flash memory and a RAM memory subject to an encoder. The collected information travels through a video output terminal. The '290 patent illustrates another hardwire system and the importance placed by experts in the art on a computer hardware interface, partly because video systems are typically data intensive and wired systems have sufficient bandwidth sufficient for transferring large amounts of data.

U.S. Patent No. 6,333,759 to Mazzilli teaches a 360° automobile video camera system. A complex mechanical mount adjusts the viewing angle of a single camera, giving a 360° range for recording video inside and outside of an automotive vehicle.

U.S. Patent No. 6,389,339 to Just teaches a vehicle operation monitoring system and method. Operation of the vehicle is monitored with an onboard video camera linked to a radio transceiver. A monitoring service includes a cellular telecommunication network to enable viewing video data received from the transceiver at a home-base computer. The system of the '339 patent is aimed at parental monitoring of adolescent driving. The mobile modem is designed for transmitting live video information into the network as the vehicle travels.

U.S. Patent No. 6,411,874 to Morgan et al. discloses an advanced law enforcement and response technology, in which a central control system affords intuitive and easy control of numerous subsystems associated with a police car or other emergency vehicle. This highly integrated system includes advanced control apparatus that drive a plurality of detector systems, including video and audio systems distributed about the vehicle. A primary feature in the device of the '874 patent includes an advanced user interface and display system, which provides for high level driver interaction with the system.

U.S. Patent No. 6,421,080 to Lambert teaches a digital surveillance system with pre-event recording. Pre-event recording is important in accident recording systems, because recording of the accident generally happens after the accident has occurred. A first memory is used for temporary storage, and images are stored in the temporary storage continuously until a trigger is activated that indicates an accident has occurred, at which time images are transferred to a more permanent memory.

U.S. Patent Nos. 6,389,340, 6,405,112, 6,449,540, and 6,718,239 to Rayner teach systems that include cameras for automobiles capturing video images, both forward- and rear-looking, and for storing recorded images locally on a mass storage system. At the end of the vehicle service day, an operator puts a wired connector into a device port and downloads information into a desktop computer system having specialized application software, so that the images and other information can be played-back and analyzed with a highly integrated user display interface.

In the systems of the Rayner patents, an administrative operator cannot manipulate at an off-site location or otherwise handle the captured data without human intervention. A download operator must transfer data captured by the recorder unit device to a disconnected computer system. While proprietary 'DriveCam' files according to the Rayner patents can be e-mailed or otherwise transferred through the Internet, those files are in a format with a can only be processed and read by desktop software installed on a remote computer. Therefore, data captured by the vehicles is unavailable to certain parties without the specialized software that may have an interest in the data. A second and major disadvantage is of the Rayner systems is that a human operator must service the equipment each day with a manual download action.

Automobile systems having a wireless communication link component also are known.

U.S. Patent No. 6,459,988 to Fan et al. teaches methods and systems for detecting vehicle collision using a global positioning system (GPS). A GPS receiver is combined with wireless technology to automatically report an accident to a remotely located third party. A system uses the GPS signals to determine when an acceleration value exceeds the preset threshold, which is meant to be indicative of an accident having occurred.

U.S. 6,862,524 to Nagda et al. teaches systems for determining and disseminating traffic information or route information using location data. Traffic information is collected from mobile units that provide their location or position information and route information may be utilized to determine whether a mobile unit is allowed or prohibited from traveling along a certain route. Related systems are disclosed in U.S. Patent Nos. 6,529,159; 6,552,682; 6,594,576; 6,664,922; 6,795,017; 6,832,140; 6,867,733; 6,882,313, and 6,922,566, all assigned to @Road Inc.

U.S. Patent No 6,728,612 to Carver et al. discloses an automated telematics test system and method, in which a telematics system in a mobile vehicle provides for a test command from a test center to be made to a call center according to a test script. The mobile vehicle is continuously in contact by way of cellular communication networks with a remotely located host computer.

U.S. Patent No. 6,947,817 to Diem discloses a nonintrusive diagnostic tool for sensing oxygen sensor operation that includes a scheme or an oxygen analyzer deployed in a mobile vehicle communicating by way of an access point to a remotely located server. A diagnostic heuristic is used to analyze the data and confirm proper operation of the sensor. An analysis may be performed by a mainframe computer based on data received from the oxygen sensor.

Relationships between mobile vehicles and remote host computers have also been disclosed in US Patent Nos. 6,735,503; 6,739,078; 6,760,757; 6,810,362; 6,832,141; and 6,850,823.

U.S. Patent No. 6,928,348 to Lightner et al. discloses Internet based emission tests that are performed on vehicles having special wireless couplings to computer networks. Data may be transferred to entities of particular interest including the EPA or the California Air Resources Board, or to certain insurance companies and other organizations concerned with vehicle emissions and with the environment.

Other disclosures in the prior art relate to reporting automobile performance parameters to remote servers via wireless links. In these disclosures, an onboard data bus in an on board diagnostic (OBD) system is coupled to a microprocessor through a standard electrical connector. The microprocessor periodically receives data and transmits that data through the wireless communication system. For example, U.S. Patent No. 6,636,790 to Lightner et al. discloses methods and apparatus for remotely characterizing vehicle performance. OBD data is periodically received by a microprocessor and passed into a local transmitter at predetermined time intervals. Therefore, the '790 patent and related prior art does not provide for the processing and analyzing of data other than at the predetermined time periods. US Patent No. 6,732,031 to Lightner et al. also describes systems, in which where motor vehicles are coupled by wireless communication links to remote host servers.

U. S. Patent No. 6,947,817 to Diem discloses nonintrusive diagnostic tools for testing oxygen sensor operation with a diagnostic system. Such system includes a wireless communication link between a vehicle and a remote network of server computers. In particular, a WiFi type access points enables an analyzer to communicate through the Internet with a server computer hosting an oxygen sensor simple object access protocol (SOAP) service. With the system of the '817 patent, smog sensors for automobiles communicate with remote servers through a WiFi communication link.

US 2005/131595 discloses methods for generating enhanced vehicle event information.

Document WO2004066275 discloses methods for surveillance in a mobile environment.

### DISCLOSURE OF THE INVENTION

It is an aspect of the present invention to provide vehicle event recorders and vehicle event recorder systems according to claim 1.

It is another aspect of the present invention to provide vehicle event recorders with an improved user interface.

It is still another aspect of the present invention to provide vehicle event recorders that do not require specialized workstation desktop applications and complex external communication mechanisms and protocols.

It is still another aspect of the present invention to provide interfaces to vehicle event recording systems that utilize standard computing platforms and readily available software.

The present invention relates to vehicle event recorders having integrated web server modules. A vehicle event recorder constructed according to the principles of the present invention is includes a video camera, a microprocessor, and a memory, as well as supporting subsystems, causing a video record of a predetermined event to be preserved when such event occurs, for example, upon the occurrence of a car crash or of an unexpected impact.

A vehicle event recorder according to the present invention is also provided with an interface system accessible with a commercially available web browser. A web server module is incorporated as part of the computer system, so that a connection with the vehicle event recorder may be generated through hypertext transfer protocol ("http") type transactions and commands. A user may interact with a vehicle event recorder unit of the present invention through a standard computer, without having to load, manage, and maintain proprietary application specific software on a workstation computer. Instead, a user may manipulate system settings, view and transfer files, receive e-mail alerts, and otherwise completely control the device with the use of a standard computer, because system functionality is provided by the integrated web server and complementary computing systems.

As a consumer product, a vehicle event recorder may be installed in a family vehicle without requiring specialized knowledge or skill. The vehicle event recorder collects video and other vehicle performance information while the vehicle is in normal operation. Upon connection to a computer network, such as a home computer network, a computer equipped with a web browser can address the vehicle event recorder, because the web server is structured to be responsive to requests sent by the web browser.

Systems according to the present invention may include pre-programmed "web pages" or "web forms," generated as computer files stored in a ROM, DRAM, or other type of memory within the vehicle event recorder. Such systems are pre-programmed with interconnects and preset relationships with certain subsystems; for example, these pages may provide an interface to camera settings such as brightness and contrast.

In certain embodiments, a file transfer protocol server and a mail transfer protocol server are also included. These servers support general interface mechanisms that enable standard computers to interact with a vehicle event recorder without the installation of specialized software and hardware systems.

### BRIEF DESCRIPTION OF THE DRAWINGS

The drawings constitute a part of this specification and include exemplary embodiments of the invention, which may be embodied in various forms. It is to be understood that in some instances various aspects of the invention may be shown exaggerated or enlarged to facilitate an understanding of the invention.
Figure 1 illustrates a block diagram showing relationships between primary elements of a system according to the present invention.
Figure 2 illustrates a block diagram of a vehicle event recorder head.
Figure 3 illustrates schematically the relationship among different components of a vehicle event recorder according to the present invention.
Figure 4 illustrates the elements of a transaction over a network element that is related to a vehicle event recorder system according to the present invention.
Figure 5 illustrates a first exemplary browser type user interface related to a vehicle event recorder according to the present invention.
Figure 6 illustrates a second exemplary browser type user interface related to a vehicle event recorder according to the present invention.
Figure 7 illustrates a first network architecture and connection structure associated with a vehicle event recorder according to the present invention.
Figure 8 illustrates a second network architecture and connection structure associated with a vehicle event recorder according to the present invention.
Figure 9 illustrates a network configuration providing remote access to a vehicle event recorder head.

### MODES FOR CARRYING OUT THE INVENTION

Detailed descriptions of embodiments of the invention are provided herein.

Throughout the present disclosure, reference is made to certain terms of art. The definitions provided herein below should not be interpreted as limiting, but rather as representative to assist the reader in the understanding of the invention.

Web Browser: A computer graphical user interface operable for receiving computer files and for presenting a graphical display that may include interactive elements sometimes called "controls" or "web controls." A browser may send requests in the form of a computer file, in a format such as XML/HTML.

Web Server: A computer module operable for exchanging information via computer files, generally in XML/HTML formats. A web server receives requests and returns responses to external parties via a communication link.

Web Request: A data transmission conforming to an Internet protocol directed to a specific web server.

Web Response: A data transmission by a web server conforming to an Internet protocol and directed to a requesting agent, usually a web browser.

Physical Anomaly: Any change in a prescribed physical parameter outside the scope of normal operating conditions.

Managed Loop Memory: A memory system arranged to fully preserve data captured during a period immediately following any specific instant, but to overwrite that data with newer data when the older data has sufficiently aged according to a predefined expiration definition.

Vehicle Environment: The environment in and around a vehicle, inclusive of those spaces inside or outside the car body. That includes activity in front of, behind, towards the sides of, and inside the driver compartment.

Communication Port: Means for supporting a data communication link, including a transceiver or modem arrangement and suitable connection apparatus. Examples include a mobile cellular transceiver, WiFi, WiMax, bluetooth, Ethernet, and a serial port such as RS-232, among others.

The present invention relates to vehicle event recorders having integrated Web servers. An embodiment of the invention includes a video camera, a microprocessor, a memory, and a web server module. Video images are captured during use of the vehicle and when a particular event occurs, a captured video series is saved to a durable memory. When the vehicle is returned to a location where network connectivity is available, the captured video series is made available for review via a web server.

The integrated web server, when connected to a TCP/IP network, can receive requests for information from external web browsers. Such requests for information may be formulated as requests to view data captured during a recent, previous period of operation. The web server is coupled to a memory, so that data and files stored in the memory may be transferred to the requesting web browser.

Web servers in systems according to the present invention are configured to display data captured by the event recorder, including video data of scenes around the vehicle that have been captured during vehicle use. These web servers are connected to settings and operational parameters of the event recorder, so that adjustments to those settings and parameters may be effected via a web browser. For example, trigger threshold values may be set to be more or less sensitive, and an event trigger system arranged to detect an abrupt acceleration action may include an adjustable sensitivity level. Through a web browser interface, the event trigger threshold can be tuned by a remote user that operates a standard web browser in communication with the device web server.

A web server is part of the user interface system. A web server and web browser connected together via a TCP/IP network form an interface system that is convenient and very powerful. Complete control of the event recorder is facilitated by prerecorded "web pages" or "web forms," that may be designed to be part of the web server. These pages and the controls thereon may be coupled to physical systems of the event recorder, so that a user having no other tools other than a standard computer with a web browser can interface with the event recorder. Therefore, the requirement for proprietary software and the complexity and inconvenience associated therewith is eliminated.

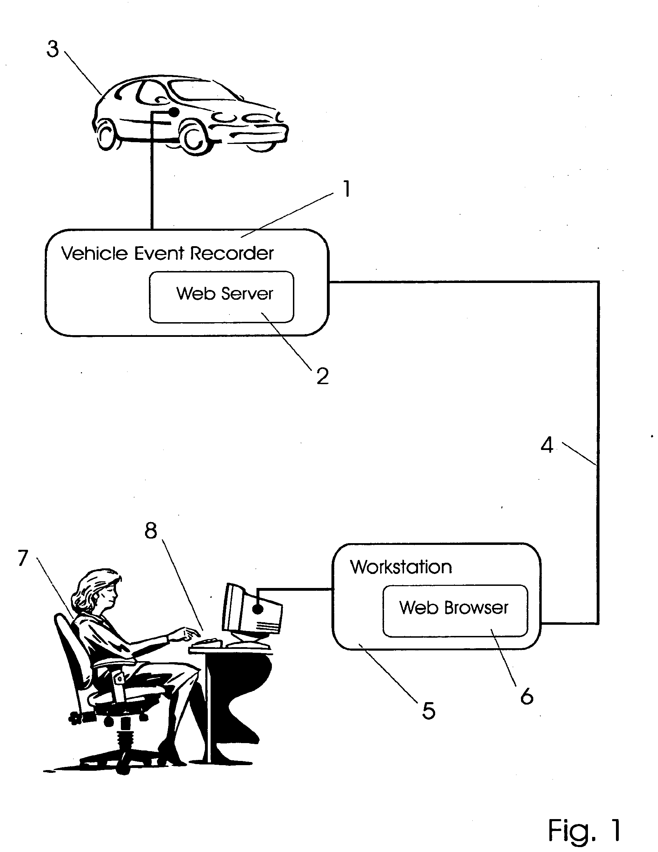

Figure 1 illustrates a vehicle event recorder head unit 1 with integrated web server 2 that is installed in a motor vehicle such as a family car 3. The vehicle event recorder head is coupled to a computer workstation 5, operable for running a web browser 6, by way of a data communication link 4, preferably a TCP/IP network. This configuration makes a graphical user interface available to a remotely located user 7 and also provides means for a remote input to and interaction with the vehicle event recorder, for example by way of a common computer keyboard 8. Therefore, a user, at her computer workplace, can provide a vehicle event recorder mounted in an automobile with instructions, updates, interactions, and downloads, and can review operation. Information developed or collected by the vehicle event recorder becomes available to a user working at a workstation through a connection using a common computer or "Internet browser" graphical user interface. For example, a user can use simple browser control interfaces to set the camera contrast and brightness while at a workstation and not in or even not near the car.

A vehicle event recorder with integrated web server is installed in the vehicle, so that a video camera has a clear view of the space in front of the car. Should a traffic accident occur, the video camera can provide a video record of traffic conditions and events leading up to the accident. A video series, including images captured just prior and just after an event moment as detected by an event trigger, is saved in a local memory of a vehicle event recorder. At a later time, when the vehicle is appropriately coupled to a workstation with a suitable communication link, video series data can be transferred to the workstation, where it may be further viewed and analyzed.

A vehicle may be coupled to a workstation by a communication link having different alternative forms, including an Ethernet hardware connection, a WiFi wireless communication link, a Bluetooth communication link, and a wireless mobile telephone network link, among others. Workstations used in these arrangements are of the type common to nearly every desktop for home or office use. While a workstation alone is insufficient for interacting with a vehicle event recorder according to the present invention, a workstation with a "web browser" or "Internet browser" such as Windows Explorer™ is suitable for providing access to the vehicle event recorder. Competing web browsers such as FireFox, Opera, Konqueror, Safari, Gecko, etcetera may also be employed. In all cases, the browser will communicate with a vehicle event recorder because they it can read, parse and produce appropriate XML/HTML transactions. Thus, users of these systems are not required to buy, subscribe to, install, learn to use, maintain, update, or re-install any proprietary software, because these types of browsers can access the required functions of the vehicle event recorder.

In prior art versions of similar systems, workstations are coupled to vehicle event recorders by way of a proprietary, application-specific software running on the workstation. With these systems, a vehicle event recorder connected to a general purpose computer cannot be accessed or managed without specially prepared programs. Data exchanges between a workstation application and a vehicle event recorder of the prior art typically include proprietary calls and file and object formats not compatible with general-purpose applications. On the contrary, a vehicle event recorder according to the present invention includes a built-in web server, so that users can access functions and settings of the vehicle event recorder by way of http transactions. In addition, simple data transfers including large video files may be taken up and handled by the same web server or by an accompanying file transfer protocol ("ftp") server.

In one embodiment, depicted in Figure 1, data communication link 4 is a common home network. For example, a vehicle parked in the household garage may become coupled to the home network by way of its proximity to a WiFi router. When a teenage driver returns home, a parent instantly can access information that includes video images of the child's driving activity by accessing an internet browser.

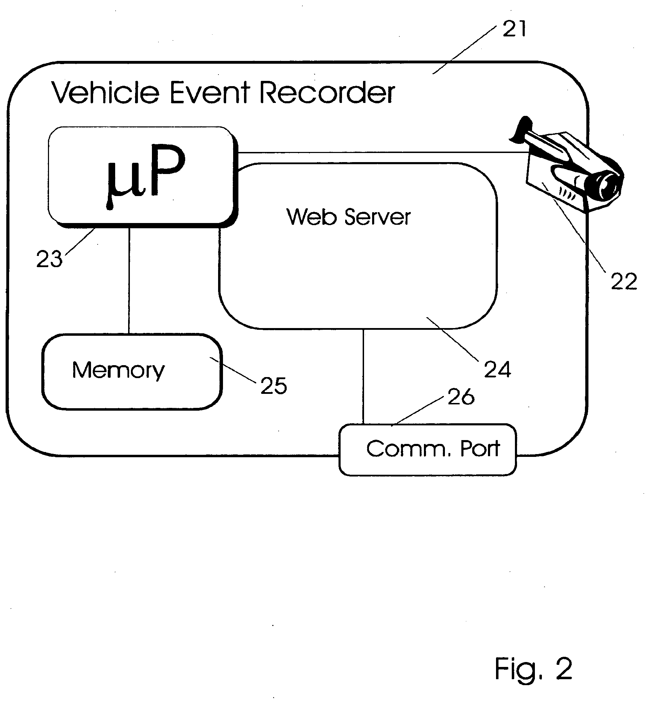

Figure 2 illustrates a top-level block diagram of an embodiment of the present invention. Video event recorder 21 includes a video camera 22, a microprocessor 23, a web server 24, a memory 25, and a communication port 26. These elements may be combined within a plastic housing mountable near or on a car windshield. For example, video camera 22 may be mounted on the interior of a vehicle, on the front passenger side. A head unit, coupled to a network or communication path through a workstation or through another server remote from the vehicle event recorder head, is collectively referred to herein as a "vehicle event recorder system."

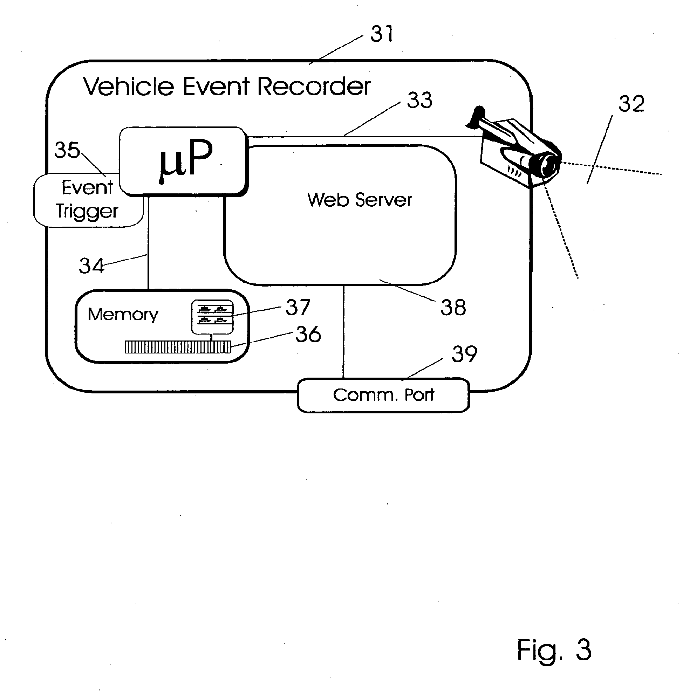

Figure 3 illustrates the architecture of an embodiment 31 of a vehicle event recorder according to the present invention. The field of view 32 of the camera may be arranged in a "forward looking" direction, so that images of activity ahead of the vehicle are captured by the camera, coupling the camera to the environment around the vehicle. The video camera is also coupled electronically 33 to the microprocessor, to which the camera may transmit image data. The microprocessor is coupled electronically 34 to a memory that may be managed by the microprocessor, in order to store image series associated with particular events such as traffic accidents. For example, upon receipt of a signal from an event trigger 35, a short video series stored in managed loop memory 36 may be transferred to a more permanent stable memory, such as a high-capacity flash type memory 37. The web server 38 is also coupled to a communication port 39, which enables the web server to interact with exterior computing systems.

In one embodiments, the camera is arranged as a forward looking camera, in another embodiment as a rearward looking cameras, and in still another embodiment as a driver compartment view camera. The number of cameras associated with a single vehicle recorder unit is not meant to be limited to one.

In one embodiment, a local memory is arranged to capture and preserve video information associated with a time immediately before and after an important event. A managed loop memory includes an overwrite process that preserves data for a limited time and overwrites data as soon as it has aged according to an overwrite scheme. Upon the occurrence of a "trigger event" - a car crash for example - the loop memory data is transferred to a buffer where it may be saved for an extended period of time without being overwritten.

An event trigger is arranged to detect a physical anomaly such as a high acceleration associated with a crash or other impact; or a heavy swerve, or an excessive braking maneuver, or in response to hitting a panic button. The event trigger signals the occurrence of an incident and directs the memory to preserve all data associated with the incident or event.

A web server in a vehicle event recorder according to the present invention preferably includes preformed "web pages" or sometimes "web forms." In one embodiment, such web pages or forms are arranged according to the technology sometimes referred to as Active Server Pages, such as in Microsoft's ASP.NET system. These pages offer great latitude in providing web controls that are coupled to the internal systems of the vehicle event recorder. For example, the video camera may be controlled by manipulating contrast, brightness and intensity with web controls available on ASP.NET pages.

Because a car is easily coupled to a home computer network via a WiFi system, one embodiment of the present invention includes a vehicle event recorder unit having an output port fashioned as a WiFi or WiMax transceiver. Alternatives may include other radio type transceivers such as bluetooth, or optical type wireless links such as those exploiting an infrared optical coupling. While not as convenient, a parked car may also be coupled to a home network via a hardwired Ethernet connection. For example, a vehicle event recorder arranged with a common network interface card could be plugged in with hardwire (RJ45 type connector) to a local Ethernet system.

A web server may be considered a part of the microprocessor or other computing platform by being embodied as a computer code module running thereon. While known vehicle event recorders have been configured with common microprocessors, in a recorder according to the present invention, a web server module might be included and provide an interface between a vehicle event recorder microprocessor and an external computing system. Accordingly, access to the functionality of the microprocessor and vehicle event recorder subsystem is provided to any computer system that addresses the web server with appropriate http transactions, that is, the web server is arranged to receive well-formed http requests (for example, http GET commands), and further to provide responses constructed as http answers (http POST responses).

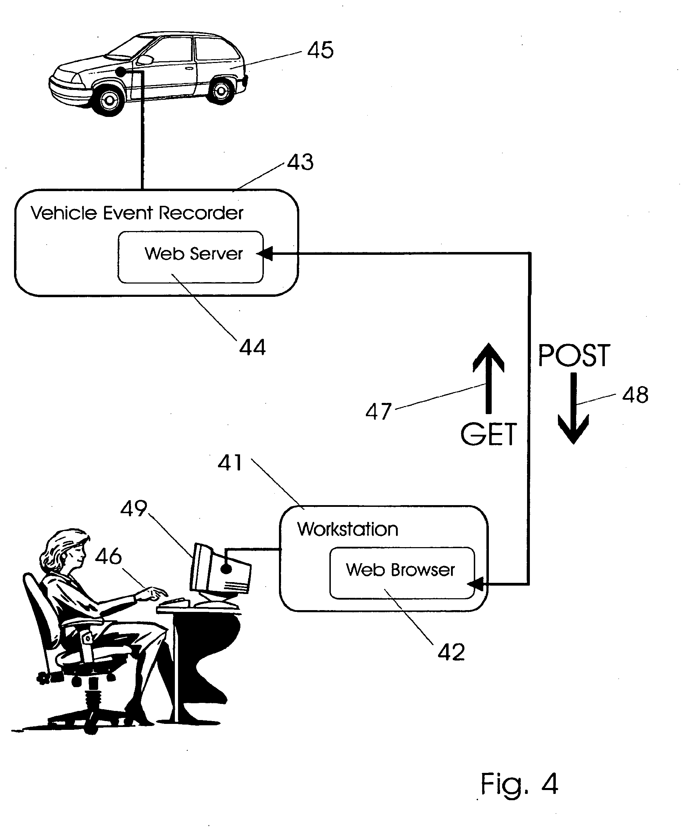

Figure 4 illustrates an exemplary transaction between a user operating at a computer workstation 41, which has web browser 42 installed and linked by a communication link to a vehicle event recorder 43 having integrated web server 44 in a family automobile 45. From the workstation keyboard, user 46 may inquire as to the state of the vehicle event recorder by sending an http request in the form of a GET type command 47. A GET command is fashioned as an http request and includes the URL of the source being addressed - the web address of the vehicle event recorder - and optionally an introduction web form or home/default web form. For example, a particular web page providing access to a certain desired functionality may have a URL as follows: "http://192.168.1.8/camerasettings.aspx". A GET command 47 that includes that URL is formed by and transmitted from the workstation's web browser to the vehicle event recorder's web server (having IP address 192.168.1.8). Upon receipt of the GET command, the web server responds by providing a POST action 48, which is a http response. The POST action may include transmission of a XML or/and HTML coded web page, which may be appropriately interpreted and displayed by the web browser and its graphical user interface or may be "window" presented to the user on a system monitor.

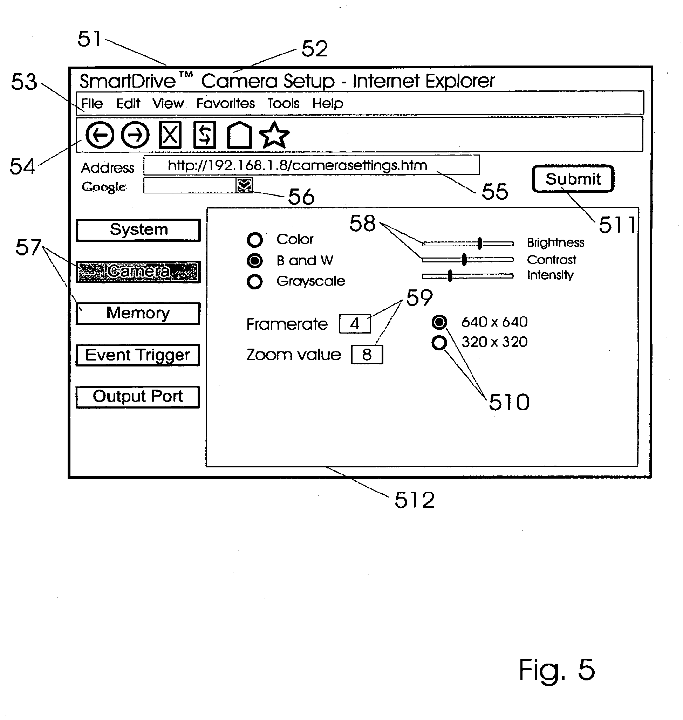

To better explain the above expression "the state of the vehicle event recorder," one may consider the following description in conjunction with Figure 5.

Figure 5 illustrates an example of a web page served by the web server of a vehicle event recorder. A web page may include interactive objects sometimes referred to as "web controls," such as the controls commonly known as menus, toolbars, drop-down boxes, listboxes, radio buttons, checkboxes, sliders, and textboxes, among others. In Figure 5, browser window 51 includes a field having a page title 52: "SmartDrive™ Camera Setup". Further, the browser window includes a graphical element known as a menu or menu bar 53 and toolbar 54. Icons associated with various functionalities are disposed across a horizontal strip. When a user clicks on any of these icons, a computer code module effects some operation.

An address line 55 may contain the URL or web address of the source currently displayed, which may also be typed-in manually by a user, or be reached by way of a hyperlink from another page displayed previously in the browser window. Typical web browser windows further include other interactive objects such as a search engine interface including a drop-down box 56, a command button controls 57, slider controls 58, textboxes 59, an option or radio buttons 510. Such web controls are accessed through a user interface, designed for interaction with the available functions in a vehicle event recorder hosting the associated web pages on its web server. A user may adjust a control and thereafter send the state of the web page to the vehicle event recorder unit by pointing and clicking, so to change the control settings of the vehicle event recorder, and then by submitting the page or by posting the page to the web server in the vehicle event recorder. For example, one might adjust the contrast of the camera by using slider control 58 and thereafter submit button 511, which results in the page being posted back to the web server and ultimately in the altering of the contrast. Each of command button controls 57 may be related to groups of different functions. For example, the functions of the camera are grouped into those displayed in field 512. If the command button associated with certain system functions is chosen, then the related functions may change without appreciable change to the general form of the page.

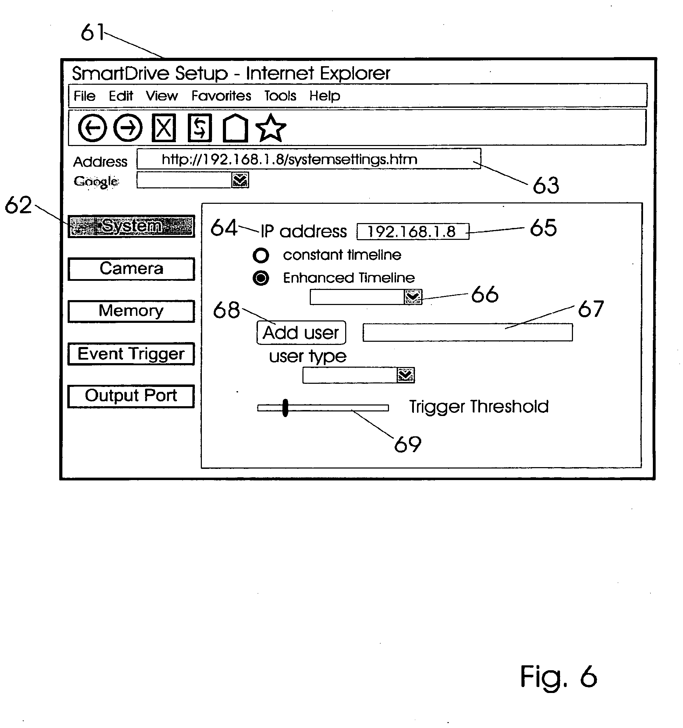

Referring now to Figure 6, a group of controls associated with a system function is illustrated as a graphical user interface embodied as a web page 61. Command button control 62 associated with the System settings is displayed by the browser through the page's URL http://192.168.1.8/systemsettings.htm 63. The page enables a user to adjust the IP address 64 of the vehicle event recorder at textbox 65. A user may choose an enhanced timeline at drop down box 66, as required in a managed loop memory system. User data/profile can be entered at textbox 67 and command button 68 can be used to save a username to a memory in the vehicle event recorder. Finally, a trigger threshold can be set on a continuous slider control 69 to make the event trigger in the vehicle event recorder either more or less sensitive. As shown, a user at a remote computer running a simple internet browser can make direct adjustments to a vehicle event recorder installed in a vehicle.

While sometimes web servers are arranged with pre-programmed web page objects addressable via web request actions, such web servers may also include programmed modules known as web services. These functions, properties and events may not be associated with a user interface, but may include a transaction interface that allows the insertion of an address via TCP/IP web requests. These functions, properties and events may also be coupled to subsystems of the vehicle event recorder head. For example, an authorized user list may be updated, so that log-on actions by certain users are enabled or disabled. This type of web service may be activated automatically, in response to some condition being met.

Therefore, a vehicle event recorder system may be adjusted and otherwise manipulated without user interaction through a web page, but instead with a purely automated process, for example, with a web service.

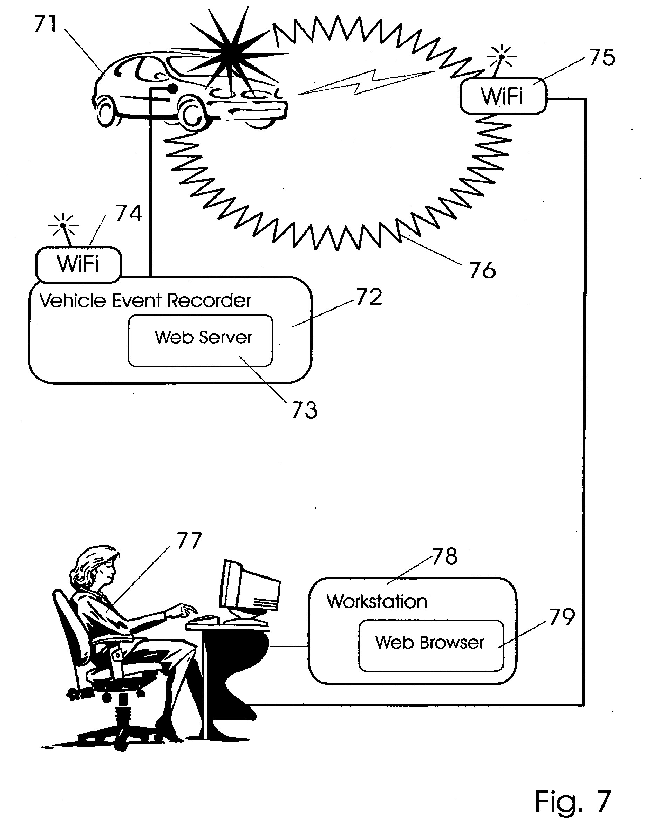

Referring now to Figure 7, a vehicle 71 is equipped with a vehicle event recorder unit 72 that includes an integrated web server 73. A communication port, for example, a WiFi transceiver 74, enables the vehicle event recorder to connect wirelessly to a home network through a complementary WiFi transceiver/router 75. When the car enters a zone or space 76 served by the transceiver/router 75, the web server 73 of the vehicle event recorder 72 is accessible by a user 77 that operates workstation 78 running a web browser 79. A user 77 may adjust, upload, download, browse, and otherwise interact with the vehicle event record and with data stored on the vehicle event recorder 72.

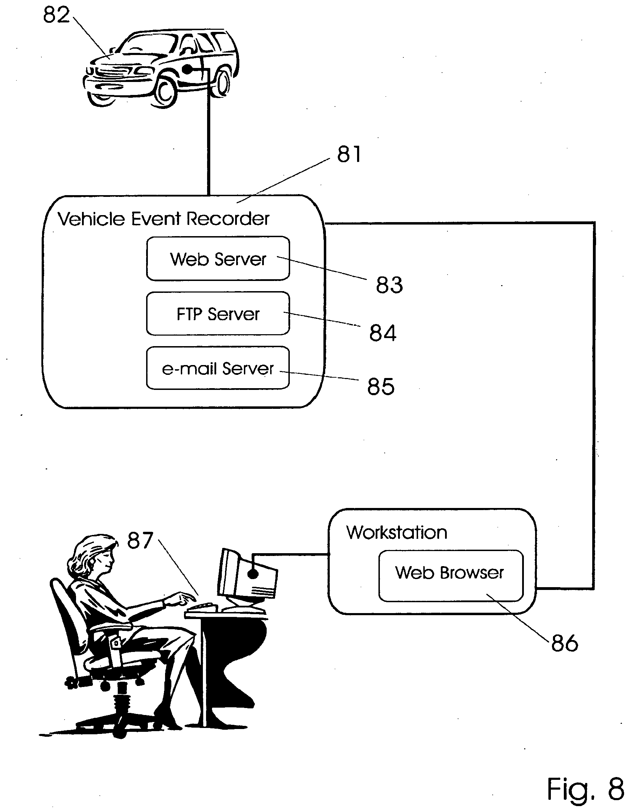

In one embodiment, a vehicle event recorder includes modules other than a simple web server. For example, a vehicle event recorder may include file exchange and e-mail server systems. Figure 8 illustrates a vehicle event recorder 81 for use with vehicle 82. The vehicle event recorder 81 includes an integrated web server 83, a file transport protocol ftp server 84, and an e-mail (SMTP) server 85. The web browser 86 at a user workstation 87 communicates with these elements in a manner known in the art and suitable for operating these functions in vehicle event recorder 81. Accordingly, automatic triggers may be installed in the vehicle event recorder so that e-mail messages may be sent in response to certain events occurring during the normal operation of the system. When an event of interest occurs, an e-mail message is prepared and queued. Upon the next connection of the vehicle event recorder with the internet, the SMTP sends the e-mail message to the intended recipient. In a similar fashion, the vehicle event recorder ftp server may send and receive data files.

While vehicle event recorders according to the present invention the invention may be configured for use with a home, with family members, or for local use with a small number of users, configurations for a more extended operation are also possible. A private home computer network can be provided with a public port that connects to the public Internet through a firewall. With this configuration, a vacationing parent can still review vehicle use records from a remote location.

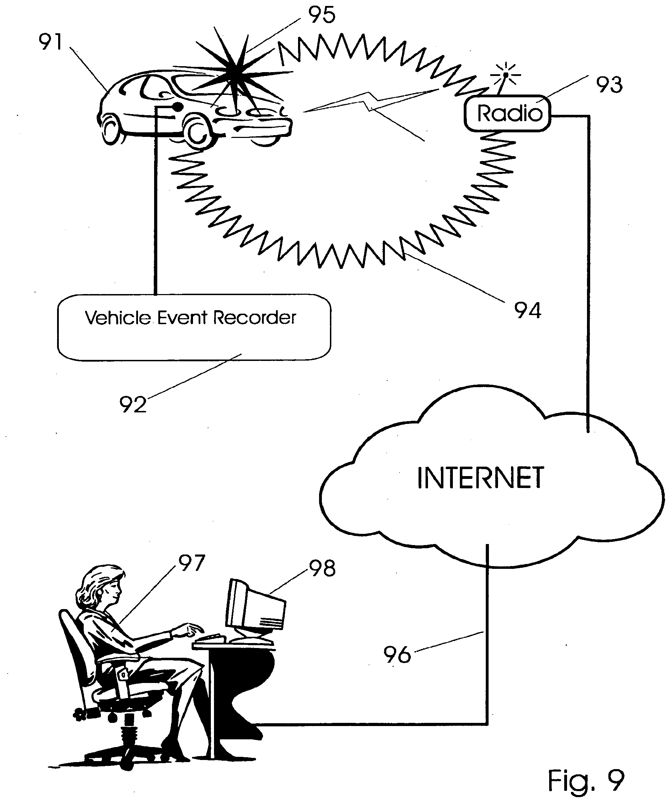

Referring now to Figure 9, vehicle 91 is equipped with vehicle event recorder 92 having an integrated web server that communicates with local radio 93 as it enters communication space 94. Through the act of entering 95 causes, the vehicle event recorder 92 becomes connected to a network which may include the Internet. Accordingly, a communication link 96 of many thousands of miles is made possible, through which a user 97 working on any workstation 98 equipped with a browser may address the web and the file and mail servers of the remotely located vehicle event recorder 92.

One benefit of the invention resides in providing simple user access to the operation and functions of a vehicle event recorder through an integrated web server.

## Claims

1. A vehicle event recorder (1, 21, 31, 72) comprising:
a video camera (22);
a microprocessor;
a memory;
a web server module (24); and
a communication transceiver (26),
wherein the video camera has a field of view covering an area in and/or around a vehicle (3) and an electronic output coupled to the microprocessor,
wherein the microprocessor is coupled (34) to the memory, enabling image data from the video camera to be stored in the memory, and
wherein the web server module (24) is electronically coupled to the communication transceiver to receive and process data transactions in accordance with an Internet protocol,
**characterised in that** the memory is a managed loop memory (36) having an overwrite scheme providing for older frames to be replaced by newer frames, the vehicle event recorder further comprising an event trigger (35) detecting a physical anomaly and causing a data transfer from the managed loop memory to a buffer memory (37), and **in that** the web server module comprises a pre-configured web page that comprises a web control, wherein the web page and the web control are configured as a graphical user interface within a standard web browser, wherein the web control is coupled to a control subsystem providing for one or more adjustments made at the graphical user interface to be transmitted to a physical subsystem of the vehicle event recorder to make one or more adjustments to the physical subsystem, wherein the one or more adjustments to the physical subsystem include an adjustment of an event trigger threshold.

2. The vehicle event recorder of claim 1, wherein the one or more adjustments to the physical subsystem further include one or more of camera brightness, camera contrast, camera intensity, camera resolution, camera frame rate, camera image color, managed loop memory timeline scheme, and/or communication transceiver IP address.

3. The vehicle event recorder of claim 1, wherein the web page is an active server page.

4. The vehicle event recorder of claim 1, wherein the web server module further comprises a pre-configured web service comprising a programming module that may be invoked with TCP/IP calls from a web browser.

5. The vehicle event recorder of claim 4, wherein the web service is a system function, property or event associated with the vehicle event recorder head controlling operation of the vehicle event recorder head.

6. The vehicle event recorder of claim 5, wherein the web service includes computer functionality having an interface adapted for TCP/IP transactions.

7. The vehicle event recorder of claim 1, further comprising a file transfer protocol server (84).

8. The vehicle event recorder of claim 1, further comprising a mail transfer protocol server (85).

9. The vehicle event recorder of claim 1, wherein the communication transceiver is a WiFi or WiMax compliant transceiver.

10. The vehicle event recorder of claim 1, wherein the communication transceiver is a cellular wireless transceiver.

11. The vehicle event recorder of claim 1, wherein the vehicle event recorder is configured for connecting to a data transmission network supporting packet traffic via TCP/IP, and wherein the vehicle event recorder is further configured for connecting to a web browser running on a workstation.

12. The vehicle event recorder of claim 11, wherein the data transmission network includes at least a portion operating as a local area network or a home network.

13. The vehicle event recorder of claim 12, wherein the data transmission network includes at least one router configured for directing data traffic in accordance with the Internet protocol.

14. The vehicle event recorder of claim 12, wherein the data transmission network is a compound network comprising a wired portion and a wireless portion.

15. The vehicle event recorder of claim 14, wherein the router is a WiFi or WiMax router, and wherein the vehicle event recorder communication transceiver is a complementary WiFi or WiMax transceiver.

16. The vehicle event recorder of claim 14, wherein the data transmission network comprises a protocol gateway interface between a TCP/IP network and a mobile cellular communication network.

## Patentansprüche

1. Fahrzeugereignisaufzeichner (1, 21, 31, 72), umfassend:
eine Videokamera (22),
einen Mikroprozessor,
einen Speicher,
ein Webservermodul (24) und
einen Kommunikationssendeempfänger (26),
wobei die Videokamera ein Sichtfeld, das einen Bereich in einem und/oder um ein Fahrzeug (3) abdeckt, und einen elektronischen Ausgang, der an den Mikroprozessor gekoppelt ist, aufweist,
wobei der Mikroprozessor (34) an den Speicher gekoppelt ist, wodurch ermöglicht wird, dass Bilddaten von der Videokamera im Speicher gespeichert werden, und
wobei das Webservermodul (24) elektronisch an den Kommunikationssendeempfänger gekoppelt ist, um Datentransaktionen gemäß einem Internetprotokoll zu empfangen und zu verarbeiten,
**dadurch gekennzeichnet, dass** der Speicher ein Speicher (36) mit verwalteter Schleife ist, der ein Überschreibungsschema aufweist, das vorsieht, ältere Frames durch neuere Frames zu ersetzen, wobei der Fahrzeugereignisaufzeichner ferner einen Ereignisauslöser (35) umfasst, der eine physikalische Anomalie detektiert und einen Datentransfer von dem Speicher mit verwalteter Schleife zu einem Pufferspeicher (37) veranlasst, und dadurch, dass das Webservermodul eine vorkonfigurierte Webseite umfasst, die eine Websteuereinheit umfasst, wobei die Webseite und die Websteuereinheit als grafische Benutzerschnittstelle innerhalb eines Standard-Webbrowsers ausgestaltet sind, wobei die Websteuereinheit an ein Steuerteilsystem gekoppelt ist, das vorsieht, dass eine oder mehrere Anpassungen an der grafischen Benutzerschnittstelle vorgenommen werden, die an ein physisches Teilsystem des Fahrzeugereignisaufzeichners zu übertragen sind, um eine oder mehrere Anpassungen am physischen Teilsystem vorzunehmen, wobei die eine oder mehreren Anpassungen am physischen Teilsystem eine Anpassung eines Ereignisauslöserschwellenwerts beinhalten.

2. Fahrzeugereignisaufzeichner nach Anspruch 1, wobei die eine oder mehreren Anpassungen am physischen Teilsystem ferner eines oder mehrere von Kamerahelligkeit, Kamerakontrast, Kameraintensität, Kameraauflösung, Kamerabildfrequenz, Kamerabildfarbe, Zeitplanschema des Speichers mit verwalteter Schleife und/oder IP-Adresse des Kommunikationssendeempfängers beinhalten.

3. Fahrzeugereignisaufzeichner nach Anspruch 1, wobei die Webseite eine aktive Serverseite ist.

4. Fahrzeugereignisaufzeichner nach Anspruch 1, wobei das Webservermodul ferner einen vorkonfigurierten Webdienst umfasst, der ein Programmiermodul umfasst, das mit TCP/IP-Anrufen von einem Webbrowser aufgerufen werden kann.

5. Fahrzeugereignisaufzeichner nach Anspruch 4, wobei der Webdienst eine Systemfunktion, -eigenschaft oder ein Systemereignis im Zusammenhang mit der Fahrzeugereignisaufzeichnerkopf-Steuerungsfunktion des Fahrzeugereignisaufzeichnerkopfes ist.

6. Fahrzeugereignisaufzeichner nach Anspruch 5, wobei der Webdienst Computerfunktionen beinhaltet, die eine Schnittstelle aufweisen, die für TCP/IP-Transaktionen geeignet ist.

7. Fahrzeugereignisaufzeichner nach Anspruch 1, der ferner einen Dateiübertragungsprotokollserver (84) umfasst.

8. Fahrzeugereignisaufzeichner nach Anspruch 1, der ferner einen Mailübertragungsprotokollserver (85) umfasst.

9. Fahrzeugereignisaufzeichner nach Anspruch 1, wobei der Kommunikationssendeempfänger ein WiFi- oder WiMax-kompatibler Sendeempfänger ist.

10. Fahrzeugereignisaufzeichner nach Anspruch 1, wobei der Kommunikationssendeempfänger ein zellulärer drahtloser Sendeempfänger ist.

11. Fahrzeugereignisaufzeichner nach Anspruch 1, wobei der Fahrzeugereignisaufzeichner zum Verbinden mit einem Datenübertragungsnetzwerk, das Paketverkehr über TCP/IP unterstützt, ausgestaltet ist und wobei der Fahrzeugereignisaufzeichner ferner zum Verbinden mit einem Webbrowser, der auf einer Arbeitsstation ausgeführt wird, ausgestaltet ist.

12. Fahrzeugereignisaufzeichner nach Anspruch 11, wobei das Datenübertragungsnetzwerk mindestens einen Teil beinhaltet, der als ein lokales Netzwerk oder ein Heimnetzwerk arbeitet.

13. Fahrzeugereignisaufzeichner nach Anspruch 12, wobei das Datenübertragungsnetzwerk mindestens einen Router beinhaltet, der zum Leiten von Datenverkehr gemäß dem Internetprotokoll ausgestaltet ist.

14. Fahrzeugereignisaufzeichner nach Anspruch 12, wobei das Datenübertragungsnetzwerk ein zusammengesetztes Netzwerk ist, welches einen drahtgebundenen Teil und einen drahtlosen Teil umfasst.

15. Fahrzeugereignisaufzeichner nach Anspruch 14, wobei der Router ein WiFi- oder WiMax-Router ist und wobei der Kommunikationssendeempfänger des Fahrzeugereignisaufzeichners ein komplementärer WiFi- oder WiMax-Sendeempfänger ist.

16. Fahrzeugereignisaufzeichner nach Anspruch 14, wobei das Datenübertragungsnetzwerk eine Protokollgatewayschnittstelle zwischen einem TCP/IP-Netzwerk und einem mobilen zellulären Kommunikationsnetzwerk umfasst.

## Revendications

1. Enregistreur d'événement de véhicule (1, 21, 31, 72) comprenant :
une caméra vidéo (22) ;
un microprocesseur ;
une mémoire ;
un module de serveur Web (24) ; et
un émetteur-récepteur de communication (26),
dans lequel la caméra vidéo a un champ de vision couvrant une zone dans et/ou autour d'un véhicule (3) et une sortie électronique couplée au microprocesseur,
dans lequel le microprocesseur est couplé (34) à la mémoire, permettant que des données d'image de la caméra vidéo soient stockées dans la mémoire, et
dans lequel le module de serveur Web (24) est couplé électroniquement à l'émetteur-récepteur de communication pour recevoir et traiter des transactions de données conformément à un protocole Internet,
**caractérisé en ce que** la mémoire est une mémoire en boucle gérée (36) ayant un schéma d'écrasement prévoyant que des trames plus anciennes soient remplacées par des trames plus récentes, l'enregistreur d'événement de véhicule comprenant en outre un déclencheur d'événement (35) détectant une anomalie physique et provoquant un transfert de données de la mémoire en boucle gérée à une mémoire tampon (37), et **en ce que** le module de serveur Web comprend une page Web pré-configurée qui comprend une commande Web, dans lequel la page Web et la commande Web sont configurées comme une interface utilisateur graphique à l'intérieur d'un navigateur Web standard, dans lequel la commande Web est couplée à un sous-système de commande prévoyant qu'un ou plusieurs ajustements effectués au niveau de l'interface utilisateur graphique soient transmis à un sous-système physique de l'enregistreur d'événement de véhicule pour effectuer un ou plusieurs ajustements sur le sous-système physique, dans lequel les un ou plusieurs ajustements sur le sous-système physique incluent un ajustement d'un seuil de déclencheur d'événement.

2. Enregistreur d'événement de véhicule selon la revendication 1, dans lequel les un ou plusieurs ajustements sur le sous-système physique incluent en outre un ou plusieurs parmi la luminosité de caméra, le contraste de caméra, l'intensité de caméra, la résolution de caméra, la fréquence de trames de caméra, la couleur d'image de caméra, le schéma de ligne de temps de mémoire en boucle gérée, et/ou l'adresse IP d'émetteur-récepteur de communication.

3. Enregistreur d'événement de véhicule selon la revendication 1, dans lequel la page Web est une page de serveur actif.

4. Enregistreur d'événement de véhicule selon la revendication 1, dans lequel le module de serveur Web comprend en outre un service Web pré-configuré comprenant un module de programmation qui peut être invoqué avec des appels TCP/IP depuis un navigateur Web.

5. Enregistreur d'événement de véhicule selon la revendication 4, dans lequel le service Web est une fonction de système, une propriété ou un événement associé à la tête d'enregistreur d'événement de véhicule commandant le fonctionnement de la tête d'enregistreur d'événement de véhicule.

6. Enregistreur d'événement de véhicule selon la revendication 5, dans lequel le service Web inclut une fonctionnalité d'ordinateur ayant une interface adaptée pour des transactions TCP/IP.

7. Enregistreur d'événement de véhicule selon la revendication 1, comprenant en outre un serveur de protocole de transfert de fichier (84).

8. Enregistreur d'événement de véhicule selon la revendication 1, comprenant en outre un serveur de protocole de transfert de courrier (85).

9. Enregistreur d'événement de véhicule selon la revendication 1, dans lequel l'émetteur-récepteur de communication est un émetteur-récepteur conforme à Wi-Fi ou WiMax.

10. Enregistreur d'événement de véhicule selon la revendication 1, dans lequel l'émetteur-récepteur de communication est un émetteur-récepteur sans fil cellulaire.

11. Enregistreur d'événement de véhicule selon la revendication 1, dans lequel l'enregistreur d'événement de véhicule est configuré pour se connecter à un réseau de transmission de données supportant un trafic de données via TCP/IP, et dans lequel l'enregistreur d'événement de véhicule est en outre configuré pour se connecter à un navigateur Web s'exécutant sur un poste de travail.

12. Enregistreur d'événement de véhicule selon la revendication 11, dans lequel le réseau de transmission de données inclut au moins une partie fonctionnant comme un réseau local ou un réseau domestique.

13. Enregistreur d'événement de véhicule selon la revendication 12, dans lequel le réseau de transmission de données inclut au moins un routeur configuré pour diriger un trafic de données conformément au protocole Internet.

14. Enregistreur d'événement de véhicule selon la revendication 12, dans lequel le réseau de transmission de données est un réseau composé comprenant une partie filaire et une partie sans fil.

15. Enregistreur d'événement de véhicule selon la revendication 14, dans lequel le routeur est un routeur WiFi ou WiMax, et dans lequel l'émetteur-récepteur de communication d'enregistreur d'événement de véhicule est un émetteur-récepteur WiFi ou WiMax complémentaire.

16. Enregistreur d'événement de véhicule selon la revendication 14, dans lequel le réseau de transmission de données comprend une interface de passerelle de protocole entre un réseau TCP/IP et un réseau de communication cellulaire mobile.
